# EUROPÄISCHE PATENTANMELDUNG

(11) **EP 1 388 886 A2**
(43) Veröffentlichungstag der Anmeldung: **11.02.2004**
(21) Anmeldenummer: 03016276.2
(22) Anmeldetag: 18.07.2003
(51) Int. Cl.: H01J 49/04

(54) **Verfahren und Vorrichtung zur Bestimmung der Isotopenverhältnisse von 18O und 16O sowie 15N und 14N**

(30) Priorität: 03.08.2002 DE 10235662
(71) Anmelder: FORSCHUNGSZENTRUM JÜLICH GMBH, 52425 Jülich (DE)
(72) Erfinder: Laumer, Werner, 6063 BD Vlodrop (NL); Schleser, Gerhard, Prof. Dr., 51238 Mönchengladbach (DE)

(57) **Zusammenfassung**

Die Erfindung betrifft ein Verfahren und eine Vorrichtung zur Bestimmung der Isotopenverhältnisse von ¹⁸O und ¹⁶O sowie ¹⁵N und ¹⁴N.

Erfindungsgemäß wird der Eingangsbereich einer Pyrolysenvorrichtung, die einem Massenspektrometer vorgeschaltet ist, sowie eine Probenvorlage und eine Probeneingabevorrichtung mit einem Schutzgas beaufschlagt, welches ein von den zu untersuchenden Isotopen abweichendes Atomgewicht hat. Vorzugsweise wird als Schutzgas Argon eingesetzt. Die genannten Vorrichtungsbestandteile, die vom Schutzgas umgeben sind werden erfindungsgemäß von einer Haube 4 umschlossen.

## Beschreibung

Die Erfindung betrifft ein Verfahren und eine Vorrichtung zur Bestimmung von Isotopenverhältnissen von ¹⁸O und ¹⁶O sowie ¹⁵N und ¹⁴N nach dem Oberbegriff des Anspruchs 1.

In der Paläoklimatologie ist es vielfach üblich, das Isotopenverhältnis von Elementen in Proben zu untersuchen. Eine häufig durchgeführte Untersuchung berücksichtigt die Bestimmung der Häufigkeitsverteilung von ¹²C und ¹³C. Zur Bestimmung der Isotopenverhältnisse wird die Methode der Massenspektrometrie eingesetzt. Die Bestimmung der Isotopenverhältnisse von ¹⁸O und ¹⁶O sowie ¹⁵N und ¹⁴N erhält zunehmend mehr Bedeutung. Hierzu werden die zu untersuchenden Proben bestehend aus Zellulose oder Holz von Baumjahresringen im Bereich von 200µg in Zinnkapseln eingewogen. Dieses entspricht einem Sauerstoffgehalt von ca. 100µg. Bei lakustrinen Sedimenten wird entsprechend dem Sauerstoffgehalt eine gleiche Menge bezogen auf Sauerstoff eingewogen.
Diese Proben werden dann in Zinnpäckchen mittels eines automatischen Probengebers einem Elementaranalysator mit Pyrolyserohr im Heliumstrom zugeführt.
Im Pyrolysator wird die zu untersuchende Probe erhitzt und dabei in seine Bestandteile zerlegt. Die Zersetzungsprodukte werden dem Massenspektrometer zugeführt. Bei der Untersuchung der Mengenverhältnisse von ¹²C und ¹³C ist die Reproduzierbarkeit mit einer Standardabweichung von maximal 0,1 Promille vergleichsweise sehr gut. Die Bestimmung der Isotopenverhältnisse von ¹⁸O und ¹⁶O oder ¹⁵N und ¹⁴N ist mit einer wesentlich größeren Ungenauigkeit in der Reproduzierbarkeit verbunden. So entsteht bei der Pyrolyse von Sauerstoff aus organischen Verbindungen wie Zellulose, Gesamtholz und lakustrinen Sedimenten, Kohlenmonoxid (CO), welches massenspektrometrisch detektiert wird. Bei der Untersuchung des ¹⁵N - ¹⁴N -Verhältnisses wird bei der Pyrolyse N₂ freigesetzt. Diese mit hoher Häufigkeit auftretenden Isotopenmoleküle CO und N₂ besitzen die gleiche Massenzahl von 28 und führen daher zu einem Fehler. Bei der pyrolytischen Umsetzung von sauerstoff- oder stickstoffhaltigen Verbindungen aus organischen Materialien mit Sauerstoff- oder Stickstoff-Gehalten von 100 µg, stellt ein geringfügiges Leck im Analysensystem durch Luft mit 20 % Sauerstoff eine erhebliche Fehlerquelle dar, indem hier der eindringende Sauerstoff an der pyrolytischen Reaktion teilnimmt zu einem weitem Fehler führt der in der Luft enthaltene Stickstoff (ca. 80%) mit der gleichen Masse wie das zu messende CO und zwar auch dann, wenn im Eingangsbereich der Pyrolysevorrichtung unter Heliumstrom gearbeitet wird.

Es ist daher die Aufgabe der Erfindung ein Verfahren und eine Vorrichtung zu schaffen, mit denen das Isotopenverhältnis von ¹⁸O und ¹⁶O sowie ¹⁵N und ¹⁴N mit einer größeren Reproduzierbarkeit bestimmt werden können. Dabei soll eine besonders leichte Handhabung gewährleistet sein und die Kosten sollen niedrig gehalten werden. Ausgehend vom Oberbegriff des Anspruchs 1 wird die Aufgabe gelöst mit den im kennzeichnenden Teil des Anspruchs 1 angegebenen Merkmalen.

Mit dem erfindungsgemäßen Verfahren und der erfindungsgemäßen Vorrichtung ist es nunmehr möglich, die Isotopenverhältnisse von ¹⁸O und ¹⁶O sowie ¹⁵N und ¹⁴N mit einer Genauigkeit von kleiner als 0,25 Promille exakt und reproduzierbar zu bestimmen.

Vorteilhafte Weiterbildungen der Erfindung sind in den Unteransprüchen angegeben.

Im Folgenden soll die Erfindung beschrieben werden.

Die Figur zeigt eine erfindungsgemäße Vorrichtung in schematischer Form.

### Es zeigt:

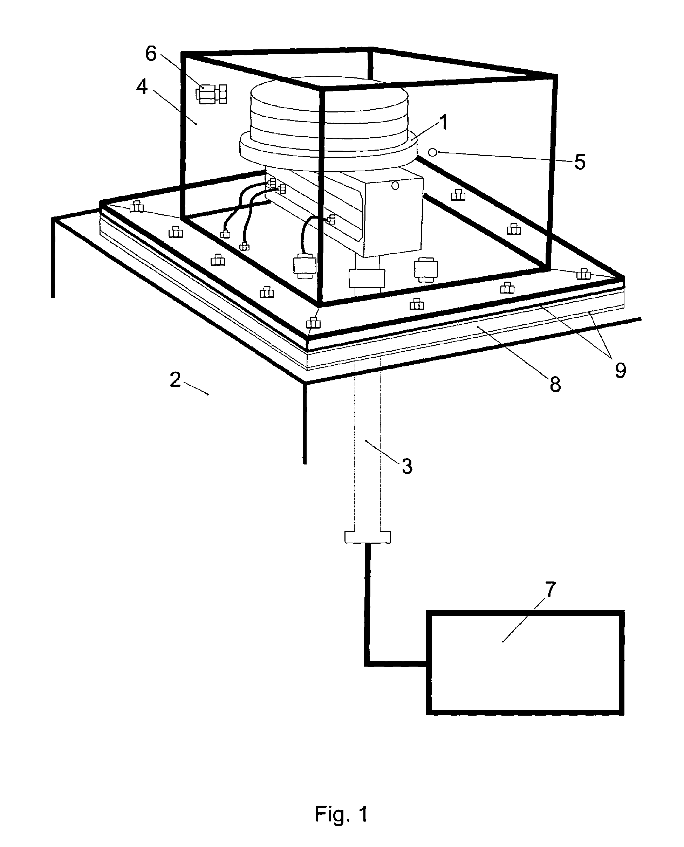

Fig. 1: Eine erfindungsgemäße Vorrichtung.

Die in Figur 1 dargestellte Vorrichtung zeigt eine Probeneingabevorrichtung 1, die an einen Pyrolysator 2 mit einem Pyrolyserohr 3 angeschlossen ist. Über der Probeneingabevorrichtung 1 befindet sich eine Haube 4, die Probeneingabevorrichtung 1 luftdicht umschließt, und über einen Gaszugang 5 sowie einen Gasausgang 6 verfügt. Das Pyrolyserohr 3 steht ausgangsseitig mit einem Massenspektrometer 7 in Verbindung. Der Edelstahlrahmen 8 verfügt über eine Dichtung 9, die vorzugsweise aus PTFE besteht.

Bei Betrieb wird die zu untersuchende Probe, zum Beispiel eine Zellulose, Holz oder ein lakustrines Sediment in einem Pyrolysator 2 pyrolsiert und anschließend einem Massenspektrometer zugeführt. Die Pyrolyse wird in der beschriebenen Anwendung bei 1080°C durchgeführt. Die Pyrolyse kann jedoch beispielsweise in einem Temperaturbereich von 1000-1400°C, durchgeführt werden. In Serienversuchen können die Proben dem Pyrolysenrohr 3 aus Samplern nacheinander zugeführt werden. In diesen Samplern befinden sich die Proben in Bevorratungsräumen, denen sie entnommen werden und die einer Entnahmevorrichtung umfassend die Probeeingabevorrichtung 1 in zeitlichen Abständen zugeführt werden. Die Eingabevorrichtung führt die Probe aus dem Bevorratungsraum in einen Schlitten, der sich im Eingangsbereich des Pyrolyserohres 3 befindet und der die Probe in das Pyrolyserohr 3 einführt. Dabei kann im Eingangsbereich des Pyrolyserohres 3 Heliumgas im Gegenstrom zur Förderrichtung der Probe geführt werden. Trotz der Einführung der Probe im Gegenstrom von Heliumgas ist die Reproduzierbarkeit der Messergebnisse bei der Bestimmung der Isotopenverhältnisse von ¹⁵N und ¹⁴N sowie ¹⁸O und ¹⁶O nach dem Stand der Technik mit vergleichsweise hohen Standardabweichungen von δ =0,4-0,5 verbunden. Erfindungsgemäß wird die Genauigkeit der Ergebnisse, sowie deren Reproduzierbarkeit dadurch verbessert, dass die Probeentnahme unter einer Atmosphäre eines Gases stattfindet, welches eine von den zu untersuchenden Molekülmassen der die Zielisotope enthaltenden Moleküle eine abweichende Atommasse besitzt. Weiterhin sollte das Gas chemisch innert sein. Dieses Gas kann einem Vorratsbehälter entnommen werden. Geeignet sind die Edelgase Helium Masse 4 und Argon Masse 40. Argon wird bevorzugt, weil es kostengünstiger ist und spezifisch der Luft ähnlicher ist und somit ein schnellerer Austausch der Luft möglich ist. Erfindungsgemäß befindet sich sowohl die Probeeingabevorrichtung, die Vorlage, der die Probe entnommen wird (z. B. der Sampler) als auch der Eingang des Pyrolyserohres 3 unter Schutzgas. Die erfindungsgemäße Vorrichtung ist so ausgestaltet, dass sie eine Haube 4 umfasst, welche die Vorlage, der die Probe entnommen wird, die Probeentnahmevorrichtung und den Eingang des Pyrolyserohres 3 umschließt. Weiterhin besitzt sie eine Öffnung 5 für die Zufuhr des Schutzgases. Die Isotopenverhältnisbestimmung wird dabei vorzugsweise so durchgeführt, dass die Haube 4 zunächst gasdicht über die Vorlage, der die Probe entnommen wird, die Probeentnahmevorrichtung und den Eingang des Pyrolyserohres 3 angebracht wird. Das eingeschlossene Volumen wird unter Schutzgasstrom geflutet, wobei das Schutzgas das Volumen über eine dafür vorgesehene Öffnung 6 verlässt. Der abgeschlossene Raum wird dabei vorzugsweise 20-30 min, mit ca. 11/min mit Schutzgas gespült. In einer anderen Ausführungsform des erfindungsgemäßen Verfahrens kann der mit Schutzgas zu befüllende Raum, der durch die Haube 4 eingeschlossen ist, zunächst mit einer Pumpe evakuiert werden, bevor das Schutzgas eingeleitet wird, bzw. bevor mit dem Schutzgas gespült wird. Hierdurch wird die Sauerstoff- und Stickstoffkonzentration von Anfang an wesentlich reduziert, wodurch der Spülprozess verkürzt wird.

Grundsätzlich kommt es darauf an, dass die Haube 4 gasdicht mit Ihrer Auflage abschließt. In einer speziellen Ausführungsform schließt der Eingangsbereich des Pyrolyserohres 3 mit einer darauf liegenden Platte ab, die einen Zugang zum Probenaufgabesystem besitzt. Der Sampler oder die Probevorlage, sowie die Probeeingabevorrichtung befinden sich bei dieser Ausführungsform auf der Platte und werden von der erfindungsgemäßen Haube 4 umschlossen. Die verschließbaren Öffnungen 5,6 für den Eintritt und Austritt des Schutzgases können sich jeweils entweder an der Haube 4 oder an einer anderen Stelle befinden, welche einen Zutritt in den Innenraum der Haube 4 ermöglicht. Der Gasdichte Abschluss mit der Platte kann durch abdichtende Kunststoffe, wie Teflon oder beispielsweise eine durch die Kante der Haube 4 umlaufende Nut mit einem Dichtring bewirkt werden. Die Haube 4 wird mit Befestigungsmitteln gasdicht auf die Platte angebracht. Diese Befestigungsmittel können beispielsweise Schnellverschlüsse, Verschraubungen oder Schnappverschlüsse sein.

Mit dem erfindungsgemäßen Verfahren und der Vorrichtung können Isotopenverhältnisbestimmungen von ¹⁸O und ¹⁶O sowie ¹⁵N und ¹⁴N mit einer Standardabweichung besser als 0,25 Promille erreicht werden. Die Verfahrensweise ist standardisiert und es wird eine einfache Handhabung ermöglicht. Die Analysezeiten und damit auch die Analysekosten werden reduziert.

Bei der Analytik von ¹²C, ¹³C Isotopen wird eine gepackte Säule verwendet. Für die Messung von Sauerstoffisotopen durch CO wird üblicherweise eine Molekularsiebsäule eingesetzt, weil damit vorhandener Stickstoff chromatographisch von CO getrennt wird. Da bei der Anwendung der Haube bei Zelluloseproben Stickstoff auszuschließen ist, würde nur der von außen eindringende Stickstoff ein Signal erzeugen. Durch die Haube ist die Stickstoffdifussion auszuschließen, und somit der Säulenwechsel nicht erforderlich, da die Sauerstoffisotope unter den erfindungsgemäßen Bedingungen auch mit gepackten Säulen bestimmt werden können. Hiermit ist eine erhebliche Zeit und Kostenersparnis bei der experimentellen Durchführung im Laborbetrieb verbunden.

### Ausführungsbeispiel:

Für die Routineanalytik hat sich entsprechend der Zielsetzung ein Setup mit folgender Zusammensetzung und Präparierung als beste Kombination ergeben:

Ein 45 cm langes Quarzrohr, als Pyrolyseröhrchen 3, mit 1,5 cm Innendurchmesser wird mit Aceton gewaschen und getrocknet. Das untere Ende wird mit 7 cm Quarzwolle gestopft. Ein ca. 1 mm dickes Nickel-Blech von 13 cm Länge, wird 14 cm vom oberen Rand als Rolle gewickelt ins Quarzrohr eingeführt. Im Anschluss wird eine Schicht von 16 cm Glassy-Carbon eingefüllt und 1 cm Nickelized-Carbon in den oberen Bereich des Glassy-Carbon vorsichtig eingerüttelt. Oberer Abschluss ist eine Lage aus 3-4 mm Nickelwolle.

Der Setup wird in den Ofen des Elementaranalysators bei Raumtemperatur eingebaut und im Heliumstrom von 80 ml/min ca. 1 Stunde konditioniert. Anschließend wird 2 Stunden auf 110°C erhitzt, um enthaltenes Wasser zu entfernen, dann auf 1080°C erhitzt und weitere 24 Stunden konditioniert.

Um sicher zu stellen, dass das System absolut leckfrei ist, werden mehrfach Leckprüfungen aller Verbindungen im Verlauf der Temperierungen mit einem Varian Leakdetector durchgeführt. Gegebenenfalls wird sorgfältig gedichtet.

Die erfindungsgemäße Haube 4 ermöglicht es, den Autosampler des Elementaranalysators unter eine Schutzgasatmosphäre zu stellen und somit die Luftexposition zu verhindern.

Bei der automatischen Probenaufgabe fällt die Probe von einem Probenteller durch Öffnen eines Schiebers in das Pyrolyserohr 3. Hierbei fließt zwar eine Heliumspülströmung, doch ist nicht auszuschließen, dass Luft bei der Probenaufgabe mit in den Pyrolyseraum eindringt, zumal der Schieber aus beweglichen Teilen mit Dichtflächen besteht, die naturgemäßem Verschleiß unterliegen und somit absolute Dichtigkeit nicht immer gewährleistet ist.

Weiterhin ist es ein bekanntes Phänomen, dass Diffusion von Gasen selbst in ein höheres Drucksystem stattfindet.

Die Haube 4 ist vorzugsweise so konstruiert, dass sie mit zwei Dichtflächen aus Teflon auf dem Elementaranalysatorgehäuse nach außen dicht montiert werden kann. Die untere Dichtung dichtet den aus Edelmetall bestehenden Aufnahmerahmen für die Plexiglashaube gegen das Elementaranalysatorgehäuse festverschraubt ab. Auf die obere Teflondichtung kann die Haube mittels vorgesehener Bohrungen an der unteren Randung der Haube, mit Schnellverschraubungen durch die 14 angebrachten Gewindestifte nach außen dicht verschraubt werden. Zusätzlich ist ein Gaseinlass und eine verschließbare Abströmung angebracht worden. Vor dem Start eines Autoruns von 196 Proben wird nach Montage der Haube der abgedeckte Raum mit ca. 30-401 Argon ca. eine halbe Stunde lang gespült. Während der Analyse wird auf eine geringere Spülströmung reduziert. Damit ist sichergestellt, dass Diffusion von Luft und Lufteintrag bei der Probenaufgabe vermieden werden.

Die hier beschriebene Methode ist für die Vermessung von Zellulose und Gesamtholzproben gut geeignet. Die mit dieser Methode erreichten Standardabweichungen betragen zur Zeit 0.25% und besser für Autoruns von je 196 Messungen bei mehreren Autoruns pro Setup. Für die Analytik von Probenmaterial werden jeweils Doppelbestimmungen durchgeführt. Zur Absicherung der Werte werden nach jeweils 10 Probenmessungen 2 unterschiedliche Laborstandards vermessen.
Proben mit einer Standardabweichung >0.25% werden neu vermessen.

Ein weiterer Vorteil der Haube ist größere Sicherheit im Routinebetrieb. Die Proben werden üblicherweise automatisch, vorzugsweise über Nacht vermessen. Ein eventuell dann auftretendes Leck im Probenaufgabesystem würden unter Schutzgas die Analysenergebnisse nicht fehlerhaft beeinflussen und somit wird die Qualität der Analysen von langen Messreihen erhöht.

## Patentansprüche

1. Verfahren zur Bestimmung von Isotopenverhältnissen von ¹⁸O und ¹⁶O sowie ¹⁵N und ¹⁴N mittels Massenspektrometrie
**dadurch gekennzeichnet,**
**dass** die Probe unter einem Schutzgas einer Pyrolyse zugeführt wird, das eine Massenzahl besitzt, welche von der Masse der zu detektierenden Moleküle, welche die zu bestimmenden Isotope enthalten, verschieden ist.

2. Verfahren nach Anspruch 1,
**dadurch gekennzeichnet,**
**dass** als Schutzgas mindestens eine Komponente aus der Gruppe bestehend aus Argon und Helium eingesetzt wird.

3. Verfahren nach Anspruch 1 oder 2,
**dadurch gekennzeichnet,**
**dass** die Vorlage, der eine Probe entnommen wird, die Probeentnahmevorrichtung und der Eingang des Pyrolyserohres 3 mit dem Schutzgas beaufschlagt werden.

4. Verfahren nach einem der Ansprüche 1 bis 3,
**dadurch gekennzeichnet,**
**dass** die Vorlage, der eine Probe entnommen wird, die Probeentnahmevorrichtung und der Eingang des Pyrolyserohres 3 mit einer Haube umgeben werden.

5. Verfahren nach Anspruch 4,
**dadurch gekennzeichnet,**
**dass** die Haube 4 evakuiert wird.

6. Vorrichtung zur Bestimmung von Isotopenverhältnissen von ¹⁸O und ¹⁶O sowie ¹⁵N und ¹⁴N mittels Massenspektrometrie,
**dadurch gekennzeichnet,**
**dass** sie folgende Vorrichtungsbestandteile umfasst:
- ein Massenspektrometer,
- ein dem Massenspektrometer vorgeschalteter Pyrolysator,
- eine Probeeingabevorrichtung,
- eine Probenvorlage
- eine Haube 4, welche den Eingangsbereich des Pyro lyserohres 3, die Probeneingabevorrichtung sowie die Probenvorlage gasdicht umschließt.

7. Vorrichtung nach Anspruch 6,
**dadurch gekennzeichnet,**
**dass** der von der Haube 4 gasdicht umschlossene Raum eine Öffnung 5 für den Eintritt eines Schutzgases besitzt.

8. Vorrichtung nach Anspruch 7,
**dadurch gekennzeichnet,**
**dass** sich die Öffnung 5 an der Haube 4 befindet.

9. Vorrichtung nach einem der Ansprüche 6 bis 8,
**dadurch gekennzeichnet,**
**dass** sie einen Gasaustritt 6 umfasst, welcher mit dem Innenraum der Haube 4 in Verbindung steht.

10. Vorrichtung nach Anspruch 9,
**dadurch gekennzeichnet,**
**dass** der Gasaustritt 6 mit einer Pumpe in Verbindung steht.
